# EUROPÄISCHE PATENTSCHRIFT

(11) **EP 0 664 905 B1**
(45) Veröffentlichungstag und Bekanntmachung des Hinweises auf die Patenterteilung: **03.04.1996**
(21) Anmeldenummer: 93921789.9
(22) Anmeldetag: 05.10.1993
(51) Int. Cl.: G06F 11/00

(54) **VERFAHREN ZUR DURCHFÜRHUNG VON TESTS AN AUF EINEM RECHNER PARALLEL ABLAUFFÄHIGEN OBJEKTEN EINES OBJEKTORIENTIERTEN PROGRAMMES**
PROCESS FOR PERFORMING TESTS ON OBJECTS OF AN OBJECT-ORIENTED PROGRAM CAPABLE OF RUNNING IN PARALLEL ON A COMPUTER
PROCEDE DE MISE EN OEUVRE DES TESTS EFFECTUE SUR DES OBJETS D'UN PROGRAMME ORIENTE OBJET, EXPLOITABLES EN PARALLELE SUR UN ORDINATEUR

(30) Priorität: 15.10.1992 DE 4234830
(43) Veröffentlichungstag der Anmeldung: 02.08.1995
(73) Patentinhaber: SIEMENS AKTIENGESELLSCHAFT, D-80333 München (DE)
(72) Erfinder: SIEBER, Stefan, D-81739 München (DE); KOLB, Sebald, D-85521 Ottobrunn (DE); ELSTNER, Andreas, D-36039 Fulda (DE)
(86) Internationale Anmeldenummer: DE9300934
(87) Internationale Veröffentlichungsnummer: WO9409432

(56) Entgegenhaltungen:
- EP-A- 0 168 307
- SOFTWARE PRACTICE & EXPERIENCE. Bd. 15, Nr. 11 , November 1985 , CHICHESTER GB Seiten 1073 - 1086 EDWARD T. SMITH 'A Debugger for Message-based Processes'
- ELEKTRONIK Bd. 40, Nr. 21 , 15. Oktober 1991 , MUNCHEN DE Seiten 204 - 212 DR. STEFAN KANEFF ET AL. 'Hardwareunabhängig und objektorientiert, Teil 2'
- MICROPROCESSORS AND MICROSYSTEMS Bd. 12, Nr. 1 , Januar 1988 , LONDON GB Seiten 33 - 39 BEATRICE LAZZERINI ET AL. 'Event-driven debugging for distributed software'
- IBM TECHNICAL DISCLOSURE BULLETIN. Bd. 16, Nr. 2 , Juli 1973 , NEW YORK US Seite 541 J. F. GRANT 'Nondegrading operating system hooking'

## Beschreibung

Die Entwicklung im Bereich der Informatik verläuft immer mehr in Richtung zu parallelen Systemen hin. Dabei bestehen prinzipiell zwei Möglichkeiten zu deren Realisierung. Zum einen kann die Hardware parallel ausgeführt werden (Vektorrechner, Transputer). Bei derartigen Entwicklungen wird der Parallelisierung auf der Hardwareebene durch geeignete Compiler auf der Softwareebene Rechnung getragen /R1/. Dieser Sachverhalt wird üblicherweise mit Parallelität im kleinen bezeichnet.

Ein weiterer Realisierungsansatz ist die Parallelität im großen. Dort wird bereits in der Designphase der Software begonnen, parallele Objekte der realen Welt auf parallele Einheiten in der Software abzubilden. In zunehmendem Maße wird dafür die Technik des objektorientierten Programmierens angewendet. Parallel ablauffähige Objekte können in dem verwendeten Betriebssystem unabhängig von der zugrundeliegenden Hardwarearchitektur abgearbeitet werden. Für die Klassen aus denen solche parallel ablauf fähigen Objekte abgeleitet werden, hat sich der Begriff Concurrentclass etabliert.

Der Test von solchen Concurrentclass-Objekten wirft neue Probleme auf. Zum einen resultieren diese Probleme aus der höheren Abstraktionsebene auf der der Programmierer beim objektorientierten Programmieren arbeitet. Zum anderen ergeben sich diese Probleme aus der Parallelität. Besonders bei der zeitabhängigen Prozeßkommunikation zwischen Objekten, die bei zeitkritischen Applikationen stattfindet.

Bisher aus der Literatur bekannte Testverfahren /L1/ beruhen darauf, daß Softwaremoduln beispielsweise instrumentiert werden. Das heißt, die zu testende Software wird mit einem zusätzlichen Stück speziellen Softwarecodes versehen, welches beim Programmablauf Aussagen über die Funktionsfähigkeit der Software erlaubt. Dieses Verfahren hat gerade im Zusammenhang mit parallel auf einem Prozessor ablauf fähigen Programmoduln, die zeitabhängig miteinander kommunizieren, gravierende Nachteile:
- Die zu testende Software wird durch die Instrumentierung verändert. Aufgrund dieser Veränderung wird das Zeitverhalten beeinflußt.
- Durch diese Eingriffe in die zu testende Software wird der zeitliche Ablauf der Objekte zueinander beeinflußt.
- Der Füllungsgrad von Buffern für Prozeßnachrichten wird beeinflußt.

In Summe wirken sich diese Nachteile dahingehend aus, daß bei den bisherigen Testverfahren keine absoluten Aussagen über Echtzeitverhalten und Ablauf der untersuchten Software gemacht werden können /L1/.

Ein weiteres Testverfahren für komplexe Prosesse ist aus Solfware practice & Experience 15 (1985) Nov., No. 11, Chichester, Sussex, GB ; E.T. Smith : "A Debugger for Message-based Processes", Seiten 1073 - 1086 , bekannt.

Die der Erfindung zugrundeliegende Aufgabe besteht darin, ein Verfahren zur Durchführung mindestens eines Tests an mindestens einem von auf einem Rechner parallel ablauffähigen Objekten eines objektorientierten Programmes anzugeben.

Diese Aufgabe wird gemäß den Merkmalen des Patentanspruchs 1 gelöst.

Weiterbildungen der Erfindung ergeben sich aus den Unteransprüchen.

Vorteilhaft an der Anwendung des erfindungsgemäßen Verfahrens ist besonders die Tatsache, daß durch Starten oder Beenden einzelner Objekte bestimmte Testszenarien einfach hergestellt werden können.

Um den Testablauf nicht zu beeinflussen, ist es günstig, bei der Unterbrechungsbehandlung die im erfindungsgemäßen Verfahren vorgesehen ist, während der Testphase nur noch Unterbrechungen für Ein- und Ausgabe im Betriebssystem zuzulassen.

Günstig ist bei der Anwendung des erfindungsgemäßen Verfahrens, daß einfach Methodenaufrufe verändert, unterdrückt, protokolliert, oder hinzugefügt werden können, wobei auch ein Vergleich eines aktuellen Methodenaufrufs mit einem vorgegebenen Sollmethodenaufruf möglich ist.

Weiterhin ist es günstig, beim Einsatz des erfindungsgemäßen Verfahren, daß Bufferinhalte zerstörungsfrei gelesen werden können und daß man durch die Analyse der Warteschlangen des Betriebssystems Informationen über anstehende Methodenaufrufe im Zusammenhang mit Objekten gewinnen kann.

Das erfindungsgemäß vorgesehene Anhalten der Systemuhr erweist sich als günstig, wenn man die Laufzeit eines Objektes bestimmen will, da sich diese aus der Differenz der Zeit zwischen zwei aufeinanderfolgenden Methodenaufrufen ergibt.

Besonders günstig ist beim erfindungsgemäßen Verfahren die Bereitstellung einer Zuordnungsinformation während des Tests. Dadurch wird es dem Programmierer ermöglicht, daß er von seiner beim Programmieren gewohnten Abstraktionsebene aus auch Testen kann. Die Zuordnungsinformation stellt eine Verbindung her von der Abstraktionsebene des objektorientierten Programmierens zur Objektcodeebene. Informationen wie Objektname, Parametername, Parameterdatentyp, die beim Compilieren verloren gehen, werden durch die Zuordnungsinformation wieder hergestellt.
Es wird dem Programmierer dadurch möglich seine Tests effizient zu gestalten, da er dieselben Bezeichnungen für Parameternamen und Objektnamen wie beim Programmieren verwenden kann, um entsprechende Testszenarien zu erstellen.

Im folgenden wird die Erfindung anhand von Ausführungsbeispielen weiter erläutert.

Figur 1 zeigt den Nachrichtenaustausch zwischen parallel ablaufenden Objekten.

Figur 2 zeigt die Einbindung eines Testprogramms in ein Betriebssystem mit Unterbrechungsbehandlung.

Figur 3 erläutert die Vorgänge beim Nachrichtenaustausch zwischen zwei Objekten.

Figur 4 zeigt wie die Zuordnungsinformation generiert werden kann.

Figur 5 zeigt ein Beispiel von parallel ablauffähigen Objekten die miteinander kommunizieren.

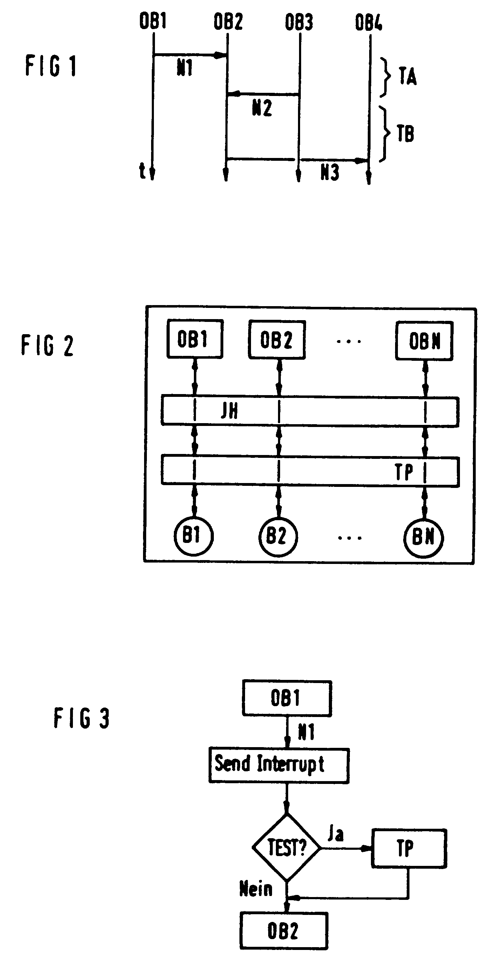

In Figur 1 wird der zeitabhängige Nachrichtenaustausch zwischen parallel ablaufenden Objekten näher erläutert. Die zwischen den Objekten stattfindenden Aufrufe, äußeren sich in der Versendung von Nachrichten n1 bis n3 auf Betriebssystemebene. In Figur 1 ist ein Sequence Chart mit vier ablaufenden Objekten OB1 bis OB4 dargestellt. OB1 sendet zu einem beliebigen Zeitpunkt einen Methodenaufruf N1 an OB2. Maximal 50 Millisekunden später muß OB2 ebenfalls einen Methodenaufruf N2 an OB2 schicken. Dieses Objekt wiederum schickt maximal 100 Millisekunden später einen Methodenaufruf N3 an Objekt OB4. Für jede Nachricht die durch die Methodenaufrufe bewirkt wird, ist ihre Form und ihr Inhalt spezifiziert. Beispielsweise enthält die Nachricht die Methodenindizes, sowie die entsprechenden Parameterbezeichnungen und Parameterwerte in festgelegter Reihenfolge. Mit TA und TB sind die Zeitbedingungen bezeichnet, die für das Versenden der Nachrichten zwischen den parallel ablaufenden Objekten eingehalten werden müssen. TA muß hier kleiner als 50 Millisekunden und TB kleiner als 100 Millisekunden sein.

Beim Testen durch Instrumentieren der einzelnen Objekte könnte nun folgendes geschehen: Beispielsweise wird Objekt OB1 instrumentiert. Beim Ablaufen des Tests unter Realzeitbedingungen benötigt die Abarbeitung der zusätzlich eingebrachten Instrumentierungssoftware beispielsweise mehr als 50 Millisekunden der Prozessorzeit. Dies hat zur Folge, daß die Nachricht N1 an das Objekt OB2 dort zu spät eintrifft. Dies wiederum bewirkt das TA größer als 50 Millisekunden ist. Es wird also die Bedingung des Sequence Charts nicht eingehalten und die Software läuft fehlerhaft ab. Analoge Betrachtungen lassen sich für das Objekt OB2 und das Versenden der Nachricht N3 an das Objekt OB4 durchführen, welche dann zu einer Nichteinhaltung der Zeitbedingung TB führen.

Figur 2 zeigt als Beispiel eine Struktur die zeigt, wie ein Testprogramm nach dem erfindungsgemäßen Verfahren im Betriebssystem, welches für den Nachrichtenaustausch Unterbrechungsbehandlung vorsieht, eingebunden werden kann.

Es sind parallel ablauffahige Objekte OB1 bis OBN, der Unterbrechungsbehandler IH, und den einzelnen Objekten zugeordnete Buffer B1 bis BN dargestellt. Folgender Sachverhalt soll veranschaulicht werden: Die parallel ablauf fähigen Objekte tauschen im Normalbetrieb bewirkt durch Methodenaufrufe Nachrichten aus, indem sie über den Unterbrechungsbehandler IH des Betriebssystems eine spezielle Nachrichten-Unterbrechungs-Behandlung veranlassen. Der Unterbrechungsbehandler für den Nachrichtenaustausch greift dann auf die einzelnen Bufferinhalte zu und überträgt die Nachrichten vom Senderobjekt zum Buffer des Empfängerobjekts.

Man kann deutlich erkennen, daß das Testprogramm TP ein integraler Bestandteil des Betriebssystems ist, während des Normalbetriebs wird über den Unterbrechungsbehandler IH transparent durch das Testprogramm TP auf die einzelnen Buffer B1 bis BN zugegriffen.

Falls vom Programmierer ein Test der einzelnen Objekte gewünscht wird, so veranlaßt er das Testprogramm durch eine Überwachung der Nachrichteninhalte, beispielsweise der Sendeund Empfangsadressen, bei den zu testenden Objekten aktiv zu werden. Dies geschieht beispielsweise dadurch, daß dem Testprogramm zu testende Objekte in Listen bekannt gemacht werden.

Für Testzwecke können einfach Testszenarien durch Starten und Beenden von Objekten beispielsweise, durch Protokollieren, Verändern, Unterdrücken oder Hinzufügen von Nachrichten generiert werden.

Darüber hinaus können Bufferinhalte B1 bis BN zerstörungsfrei gelesen werden. Zusätzlich kann die angehaltene Systemuhr abgelesen werden. Weiterhin bietet sich die Möglichkeit des Beobachtens der Prozeßlandschaft, welche durch die hier ablaufenden Objekte repräsentiert wird, durch Analyse der Warteschlangen des Betriebssystems.

Zusätzlich können durch Hinzufügen von Nachrichten und Löschen von Bufferinhalten Objekte simuliert werden. Beispielsweise können Methodenaufrufe von noch nicht realisierten Objekten generiert werden.

Mit dem erfindungsgemäßen Verfahren ist es so möglich, mit dem Testprogramm absolute Aussagen über das Echtzeitverhalten und den Ablauf der untersuchten Objekte OB1 bis OB4 zu machen. Aus Figur 2 kann man noch weiterhin erkennen, daß das Testprogramm TP nicht Bestandteil der parallel ablaufenden Objekte OB1 bis OB4 ist. So hat es in seiner Eigenschaft dem Betriebssystem zuzugehören, keinen Einfluß auf den Zeitablauf der Objekte.

In Figur 3 ist eine beispielhafte Ausführungsform des erfindungsgemäßen Verfahrens anhand des Nachrichtenaustauschs zwischen einem Objekt OB1 und OB2 veranschaulicht. Das Objekt OB1 bewirkt über einen Methodenaufruf beim Objekt OB2 einen Nachrichtenaustausch N1. Es veranlaßt durch seinen Methodenaufruf N1 einen send-interrupt beim Unterbrechungsbehandler IH des Betriebssystems. Die Unterbrechungsbehandlung für Senden sieht in diesem Fall eine Sicherung der relevanten Speicher aller Objekte und der für deren Betrieb erforderlichen Zustandsvariablen vor. Dieser Schritt wird durchgeführt. In diesem Fall sind die relevanten Speicher die Prozessorregister. Anschließend erfolgt eine Abfrage 'Test?'. Falls kein Test durchgeführt werden soll, überträgt die Unterbrechungsbehandlung die Nachricht N1, welche dem Methodenaufruf entspricht, in den Buffer B2 für das Objekt OB2. Alsdann werden die zuvor gespeicherten Variablen und Speicherinhalte wieder geladen und der Normalbetrieb wird wieder in Gang gesetzt.

Falls bei der Testabfrage festgestellt wird, daß ein Testlauf vorliegt, so wird in das Testprogramm verzweigt. Es wird die Betriebssystemuhr angehalten. Im Testprogramm können dann verschiedene Ein- und Ausgaben getätigt werden, die für die Durchführung eines Tests erforderlich sind. Insbesondere wird hier auf die Zuordnungsinformation zwischen Objektcode und Sourcecode zugegriffen. Für die Spezifikation der Tests verwendet der Programmierer nur Begriffe, die er von der Source-code-Programmierung kennt.

Im Methodenaufruf, der Nachricht N1, ist beispielsweise ein Methodenindex enthalten. Jedes Objekt einer Concurrentclass enthält einen Verweis auf einen Methodenvektor, welcher alle Ansprungadressen für die in der zugehörigen Concurrentclass erlaubten Methoden enthält und zwar ihrer Reihenfolge (Index) nach geordnet, mit den zugehörigen Ansprungadressen aus dem Speicherbereich des Prozessors. Über einen Vergleich der Ansprungadresse die über den Methodenindex dort angesprochen wird, ist es mit Hilfe der Zuordnungsinformation möglich, den zugehörigen Methodennamen wieder aufzufinden.

Weiterhin findet anhand des Methodennamens und des Klassennamens ein Zugriff auf die Zuordnungsinformationen statt, sodaß für die Interpretation eines Methodenaufrufs und für das Erzeugen eines Methodenaufrufs, auch die Parameternamen und Parameterdatentypen zur Verfügung stehen. Auf diese Weise ist es beim Testen möglich, Parameterwerte datentypgerecht auszugeben und zu verändern.

Nach Beendigung des Testprogramms wird wieder an dieselbe Stelle im Ablauf verzweigt, die sich aus einer Testabfrage 'nein' ergibt. Bei Figur 3 handelt es sich um eine spezielle Ausprägung von Figur 2. Die Bezeichnungen sind analog verwendet. Es soll hier noch einmal anschaulich dargestellt werden, daß das Testprogramm TP kein Objekt ist, welches parallel mit den anderen Objekten OB1 bis OB4 abläuft, sondern ein integraler Bestandteil des Betriebssystems.

Das Testprogramm TP wird hier beispielsweise über eine Unterbrechungsbehandlung, die im Betriebssystem für den Nachrichtenaustausch von Nachrichten zwischen Objekten vorgesehen ist, aufgerufen. Damit erreicht man eine saubere Trennung zwischen dem Ablauf der einzelnen Objekte im Parallel- bzw. Normalbetrieb und zwischen den Ablauf des Testprogramms beim Testbetrieb. Die Ausführung des Testprogramms gleichgültig wie lange sie dauert, hat keinerlei zeitliche Auswirkungen auf den Ablauf der einzelnen Objekte.

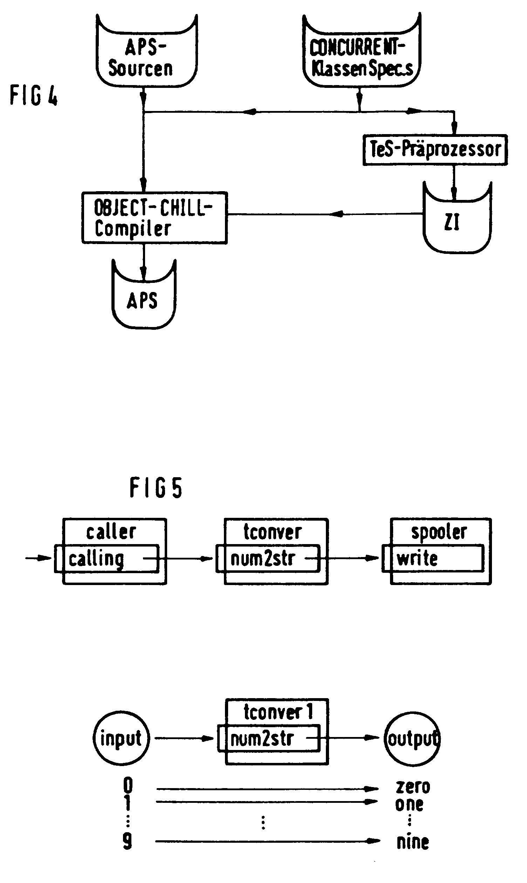

Figur 4 zeigt ein Beispiel wie die Zuordnungsinformation gewonnen und beim Compilieren hinzugebunden werden kann. Die Information aus den Concurrentclassen Spec.s wird in einem Testsystem TeS Präprozessor aufbereitet. Dort werden insbesondere die Methodennamen der einzelnen Concurrentclassen in Verbindung mit ihren Ansprungadressen festgelegt. Weiterhin werden die Parameterdatentypen und die entsprechenden Parameternamen festgehalten. Diese Information wird dann in einer Zuordnungsinformamtion ZI eingetragen.

Figur 5 zeigt ein Beispiel von drei Concurrentclassen. Diese Klassen sind mit caller, conver und spooler bezeichnet. Sie enthalten jeweils eine Methode. caller enthält calling, tconver enthält num2str und spooler enthält write.

Aus diesen Klassen können Objekte abgeleitet werden, die parallel ablaufen. Die Methode calling ruft beispielsweise num2str auf und übergibt die Parameter 0 bis 9. Die Methode num2str der Klasse tconver konvertiert den Eingangsparameter (Ziffer 0 bis 9 ) in eine Zeichenfolge 'null', bis 'neun'. Anschließend ruft die Methode num2str die Methode write der Klasse spooler auf und bewirkt so einen Ausdruck der umgewandelten Ziffern am Terminal.

In Figur 5 ist weiter beispielsweise ein Objekt tconverl, dargestellt, welches die Methode num2str enthält. Der Input für num2str besteht in einer Ziffernfolge und der output von num2str besteht in einer Zeichenfolge wie es in Figur 5 dargestellt ist.

Man kann sich leicht vorstellen, daß aus den Concurrentclassen caller tconver und spooler mehrere Objekte instantiiert werden, die parallel zueinander ablaufen, Beispielsweise kann während ein Objekt tconver 1 einen Methode num2str ausführt, gleichzeitig ein Objekt caller 2 die nächste Ziffer aufrufen. Analog gilt das für den Ausdruck mit einem Objekt Spooler 3 beispielsweise, welches mit seiner Methode write das Ergebnis einer num2str Methode eines Objektes tconver2 ausdruckt.

### Literatur

- /L1: Liggesmeyer, Peter
Modultest und Modulverifikation: state of the art, Mannheim; Wien; Zürich BI-Wiss.Verl., 1990 (Angew.Informatik; Bd 4) ISBN 3-411-14361-4
- /R1/: Raebel, G.
Ein vektorisierender Pascel-Compiler in: Informatik in der Praxis: Aspekte ihrer industriellen Nutzanwendung / hrsg. von H.Schwärtzel Springer-Verl. Berlin-Heidelberg New York 1986 ISBN 3-540-17054-5

### Bezugszeichenliste

- OB1 ... OBN: Objekte
- N1 ... N3: Nachrichten
- TA, TB: Zeitparameter
- IH: Unterbrechungsbehandler
- B1...BN: Buffer

## Patentansprüche

1. Verfahren zur Durchführung mindestens eines Tests an mindestens einem von auf einem Rechner parallel ablauffähigen Objekten eines objektorientierten Programms, mit folgenden Merkmalen:
a) das Betriebssystem des Rechners (APS), unter welchem das objektorientierte Programm ablaufen soll, wird für eine beliebige Anzahl von Tests lediglich einmal in der Form instrumentiert, daß es für den Testfall auf eine Zuordnungsinformation (ZI) zugreift,
b) vor einem Test werden aus den Spezifikationen der Concurrent-Klassen des objektorientierten Programmes durch Parsen deren Source-Codes Zuordnungsinformationen (ZI) zwischen Source-Code und Objekt-Code des objektorientierten Programms festgelegt und die zu testenden Programmelemente dem Rechner in geeigneter Weise als Testlinge bekannt gemacht
c)die Kommunikation zwischen parallel ablaufenden Objekten erfolgt über Methodenaufrufe, die Bestandteil der objektorientierten Programmiersprache sind,
d) bei jeder Kommunikation zwischen zwei parallel ablaufenden Objekten wird geprüft, ob das gerufene oder das rufende Objekt oder die benutzte Methode ein Testling ist,
e) falls d) zutrifft tritt der Testfall ein und es werden zum Test interaktiv eingegebene, oder aus Dateien eingelesene Testkommandos abgearbeitet,
f) die Testein- und -Ausgaben erfolgen auf der Source-Code-Ebene der objektorientierten Programmiersprache erfolgen, wobei zur Herstellung der Verbindung zwischen Source- und Objekt-Code gemäß a) auf die unter b) erzeugte Zuordnungsinformation zugegriffen wird,
g) das relative Zeitverhalten der Objekte des getesteten objektorientierten Programms wird nicht verändert, indem während der Abarbeitung der Testkommandos zum einen diese Objekte vom Scheduling des Betriebssystems ausgeschlossen werden und zum anderen die Systemuhr angehalten wird.

2. Verfahren nach Anspruch 1, bei dem die Methodenaufrufe zwischen den parallel ablaufenden Objekten des objektorientierten Programms über im Betriebssystem des Rechners vorgesehene Routinen zum Nachrichtenaustausch realisiert werden, indem diese Routinen zu Testzwecken instrumentiert werden.

3. Verfahren nach einem der Ansprüche 1 bis 2, bei dem die Zuordnungsinformation (ZI) aus zwei Teilen besteht, wobei eine erste Zuordnungsinformation zwischen Source- und Objektcode des objektorientierten Programms beim Compilieren des Betriebssystems dazugebunden wird und ein zweiter Teil der Zuordnungsinformation, welcher der Methodenidentifizierung dient, zur Laufzeit mindestens durch einen Vergleich einer Ansprungadresse im Speicher des Rechners mit einem Methodenindex gewonnen wird.

4. Verfahren nach einem der Ansprüche 1 bis 3, bei dem zum Test mindestens ein Methodenaufruf unterdrückt, geändert und/oder zusätzlich eingebracht wird.

5. Verfahren nach einem der Ansprüche 1 bis 4, bei dem zum Test Parameterwerte eines Methodenaufrufs verändert werden.

6. Verfahren nach einem der Ansprüche 1 bis 5, bei dem zum Test die Laufzeit eines Objekts durch die vergangene Systemzeit zwischen zwei aufeinanderfolgenden Methodenaufrufen bestimmt wird.

7. Verfahren nach einem der vorangehenden Ansprüche, bei dem die Zuordnungsinformation Methodennamen betrifft.

8. Verfahren nach einem der vorangehenden Ansprüche, bei dem die Zuordnungsinformation Parameterwerte betrifft.

9. Verfahren nach einem der vorangehenden Ansprüche, bei dem die Zuordnungsinformation Parameter-Datentypen betrifft.

10. Verfahren nach einem der vorangehenden Ansprüche, bei dem die Zuordnungsinformation Parameterbezeichnungen betrifft.

## Claims

1. Process for performing at least one test on at least one of the objects of an object-oriented program capable of running in parallel on a computer, having the following features:
a) the operating system of the computer (APS) under which the object-oriented program is intended to run is instrumented for any number of tests just once in the form that for the test case it accesses allocation information (ZI),
b) before a test, items of allocation information (ZI) are established between source code and object code of the object-oriented program from the specifications of the concurrent classes of the object-oriented program by parsing their source code, and the program elements to be tested are made known to the computer in a suitable way as test subjects
c) the communication between parallel running objects takes place by means of method calls, which are a component part of the object-oriented programming language,
d) in every communication between two parallel running objects it is tested whether the called or the calling object or the methods used is a test subject,
e) if d) applies, the test case occurs and for the test interactively input test commands or test commands read in from files are processed,
f) the test inputs and outputs take place on the source code level of the object-oriented programming language, the allocation information generated under b) being accessed to establish the connection between source code and object code according to a),
g) the relative runtime behaviour of the objects of the tested object-oriented program is not changed by providing that during the processing of the test commands on the one hand these objects are excluded from the scheduling of the operating system and on the other hand the system clock is paused.

2. Process according to Claim 1, in which the method calls between the parallel running objects of the object-oriented program are realised by means of message exchange routines provided in the operating system of the computer, by these routines being instrumented for test purposes.

3. Process according to one of Claims 1 or 2, in which the allocation information (ZI) comprises two parts, a first item of allocation information between source code and object code of the object-oriented program being linked thereto during the compiling of the operating program and a second part of the allocation information, which serves for method identification, at the runtime is obtained at least by a comparison of a branch address in the memory of the computer with a method index.

4. Process according to one of Claims 1 to 3, in which, for the test, at least one method call is suppressed, changed and/or additionally incorporated.

5. Process according to one of Claims 1 to 4, in which, for the test, parameter values of a method call are changed.

6. Process according to one of Claims 1 to 5, in which, for the test, the runtime of an object is determined by the elapsed system time between two successive method calls.

7. Process according to one of the preceding claims, in which the allocation information relates to method names.

8. Process according to one of the preceding claims, in which the allocation information relates to parameter values.

9. Process according to one of the preceding claims, in which the allocation information relates to parameter data types.

10. Process according to one of the preceding claims, in which the allocation information relates to parameter designations.

## Revendications

1. Procédé de mise en oeuvre d'au moins un test effectué sur au moins un des objets d'un programme orienté objet, exploitables en parallèle sur un ordinateur, présentant les caractéristiques suivantes :
a) le système d'exploitation de l'ordinateur (APS) sous lequel doit tourner le programme orienté objet n'est instrumenté qu'une seule fois pour un nombre quelconque de tests de telle sorte que, lors d'un test, il accède à une information de correspondance (ZI) ;
b) avant un test, à partir des spécifications des classes concurrentes du programme orienté objet, une analyse de leurs codes source détermine les informations de correspondance (ZI) entre le code source et le code objet du programme orienté objet et les éléments du programme à tester sont communiqués comme éléments à tester de manière adéquate à l'ordinateur ;
c) la communication entre les objets exploités en parallèle se déroule grâce à des appels de méthodes qui font partie intégrante du langage de programmation orienté objet ;
d) lors de chaque communication entre deux objets exploités en parallèle, le système contrôle si l'objet appelé ou appelant ou la méthode utilisée constitue un élément à tester ;
e) si la réponse à d) est affirmative, le cas de test intervient et des commandes de test introduites de manière interactive en vue du test ou lues dans des fichiers sont exécutées ;
f) les entrées et sorties du test se déroulent au niveau du code source du langage de programmation orienté objet, étant entendu que, pour établir le lien entre le code source et le code objet comme décrit sous a), l'on accède à l'information de correspondance générée sous b) ;
g) le comportement temporel relatif des objets du programme orienté objet n'est pas modifié étant donné que, durant l'exécution des commandes de test, d'une part, ces objets sont exclus de la séquence du système d'exploitation et que, d'autre part, l'horloge système est arrêtée.

2. Procédé selon la revendication 1, dans lequel les appels de méthodes entre les objets du programme orienté objet exploités en parallèle sont réalisés à l'aide de sous-programmes prévus dans le système d'exploitation de l'ordinateur en vue de l'échange de messages en instrumentant ces sous-programmes à des fins de test.

3. Procédé selon l'une des revendications 1 à 2, dans lequel l'information de correspondance (ZI) se compose de deux parties, une première information de correspondance entre le code source et le code objet du programme orienté objet étant intégrée lors de la compilation du système d'exploitation et une deuxième partie de l'information de correspondance servant à identifier la méthode est acquise au moment de l'exploitation au moins par une comparaison d'une adresse de saut présente dans la mémoire de l'ordinateur avec un index des méthodes.

4. Procédé selon l'une des revendications 1 à 3, dans lequel au moins un appel de méthode est inhibé, modifié et/ou ajouté en vue du test.

5. Procédé selon l'une des revendications 1 à 4, dans lequel des valeurs de paramètres d'un appel de méthode sont modifiées en vue du test.

6. Procédé selon l'une des revendications 1 à 5, dans lequel la durée d'exploitation d'un objet est, en vue du test, déterminée par le temps système écoulé entre deux appels de méthodes successifs.

7. Procédé selon l'une des revendications précédentes, dans lequel l'information de correspondance concerne des noms de méthodes.

8. Procédé selon l'une des revendications précédentes dans lequel l'information de correspondance concerne des valeurs de paramètres.

9. Procédé selon l'une des revendications précédentes, dans lequel l'information de correspondance concerne des types de données de paramètres.

10. Procédé selon l'une des revendications précédentes, dans lequel l'information de correspondance concerne des désignations de paramètres.
